Europäisches Patentamt

European Patent Office

Office européen des brevets

(19)

(11) Publication number: **0 079 970**
**B1**

# EUROPEAN PATENT SPECIFICATION

(45) Date of publication of patent specification: **20.11.86**

(51) Int. Cl.⁴: **G 01 N 17/00**

(21) Application number: **82901624.5**

(22) Date of filing: **29.05.82**

(86) International application number:
**PCT/JP82/00211**

(87) International publication number:
**WO 82/04320 09.12.82 Gazette 82/29**

(54) **METHOD OF PREDICTING DURABILITY OF COATED METAL MATERIAL.**

(30) Priority: **29.05.81 JP 81142/81**

(43) Date of publication of application:
**01.06.83 Bulletin 83/22**

(45) Publication of the grant of the patent:
**20.11.86 Bulletin 86/47**

(84) Designated Contracting States:
**DE FR GB**

(56) References cited:
**JP-B-44 024 874**
**US-A-4 046 002**

(73) Proprietor: **NISSHIN STEEL CO., LTD.**
**4-1 Marunouchi 3-chome**
**Chiyoda-ku Tokyo 100 (JP)**

(72) Inventor: **TAKESHIMA, Eiki Product Research**
**Dev. Center**
**Nisshin Steel Co. Ltd. 7-1 Koyashinma-chi**
**Ichikawa-shi Chiba 272-01 (JP)**
Inventor: **MIZUKI, Hisamitsu Product Research**
**Dev. Center**
**Nisshin Steel Co. Ltd. 7-1 Koyashinma-chi**
**Ichikawa-shi Chiba 272-01 (JP)**
Inventor: **TAKAMURA, Hisao Product Research**
**Dev. Center**
**Nisshin Steel Co. Ltd. 7-1 Koyashinma-chi**
**Ichikawa-shi Chiba 272-01 (JP)**

(74) Representative: **Warden, John Christopher et al**
**R.G.C. Jenkins & Co. 12-15, Fetter Lane**
**London EC4A 1PL (GB)**

Courier Press, Leamington Spa, England.

**Description**

Technical field

This invention relates to a method of predicting the durability of coated metallic materials with respect to their properties selected in accordance with their application purposes and external conditions in service, by obtaining approximate equations representing changes of the selected properties with the passage of time from correlation between results of short-term practical exposure tests and those of artificial accelerated weathering tests.

Background art

Coated metallic materials produced by applying coatings onto the surface of cold-rolled steel sheets, molten galvanized steel sheets, electro-galvanized steel sheets, molten aluminized steel sheets, etc. are used in many cases for a variety of applications such as interior or exterior building material, equipment and vehicle applications. Recently, even coated stainless steel has been developed as roofings. When the coated steel sheets are used as exterior building materials, the deterioration rate of the coating film and the corrosion rate of the steel sheet will vary depending upon external conditions during their use; for example, meteorological conditions such as amounts of solar radiation, sunshine duration, air temperature, humidity and rainfall duration, and environmental factors such as sulfurous acid gas, marine salt particles, various kinds of dust and pollutants. Accordingly, in the artificial accelerated weathering tests to be conducted under simply set conditions, such as Sunshine Weather-O-Meter tests and salt water spray tests, it is impossible to reproduce deteriorated forms of the coated steel sheets in perfect agreement with those under actual use conditions, and further no consideration is given in these tests to the fact that the deterioration rate varies depending upon external use conditions. Further, in conventional tests for predicting the durability of the coated metallic material, the deterioration state of the coating film has been evaluated by observing chiefly changes in its appearance, such as decrease in gloss, discoloration, stain, chalking, blistering, peeling, cracking and rusting. However, the conventional tests are disadvantageous in that changes with lapse of time in important factors relevant to the durability cannot be estimated quantitatively, including for example, reduction in adhesion between the coating film and the metallic substrate material. Thus, it has been strongly required to develop a method by which the durability of the coated metallic materials can be predicted with high accuracy, with reflection of differences in their application purposes and external use conditions, by short-term tests.

Disclosure of invention

The inventors, as a result of various studies on such prediction method, have found that although the change quantity of measured value per hour lapsed varies, even with respect to the same property of the coated metallic material, depending upon the kind of the artificial accelerated weathering test method adopted, the measured values obtained in a different plurality of artificial accelerated weathering tests can be plotted substantially on the extension of the data obtained in the practical exposure test in such a manner that for every artificial accelerated weathering test method, the number of test hours is converted to the number of years and plotted with the same ratio as that of the number of exposure years for the practical exposure test to the number of test hours for the artificial accelerated weathering test, both of which tests give substantially the same measured value. Also, it has been found that for the purpose of predicting more exactly the durability of the coated metallic material during the practical use, it is desired to conduct at least four types of artificial accelerated weathering tests to provide various external conditions. Further, it has been found that relation between the number of years lapsed and change in the properties obtained by plotting the data of the artificial accelerated weathering test nearly on the extension of the data of the practical exposure test is in good agreement with that between the number of years lapsed and change in the properties in case of actual use of the coated metallic material under the external conditions in the practical exposure test. This invention is accomplished on the basis of the findings.

The object of this invention is to provide a method of predicting, with high accuracy, the durability of coated metallic materials with reflection of differences in their uses and external use conditions, by short-term tests.

According to the present invention there is provided a method of predicting the durability of a coated metallic material with respect to its properties selected according to its application purposes and the external conditions during its use, the method consisting of carrying out a practical exposure test for a short period of time but for not less than two years, along with at least one group of artificial accelerated weathering tests, the or each group including at least a mild type for example the Xenon Fade-O-Meter test or Sunshine Weather-O-Meter test, an accelerated corrosion type, a heat acceleration type and an ultraviolet irradiation type test; plotting data obtained in the practical exposure test on a coordinate system with the number of years as the x coordinate axis and the measured value in the property selected as the y coordinate axis to depict a temporary prediction line; then plotting data obtained in each type of accelerated weathering test which are within the range of the measured values obtained in said practical exposure test, on the coordinate system in which the temporary prediction line is depicted, so as to be positioned on said temporary prediction line or uniformly dispersed about the line while converting the test hours in each type of accelerated weathering test to the number of test years in the practical exposure test so

2

that said test hours and test years may be in relation of direct proportion; further plotting the measured values obtained in the types of accelerated weathering tests which are outside the range of the measured values obtained in the practical exposure test, on said coordinate system; determining the approximate equation: y=f(x) representing the whole plot thus obtained, wherein y represents the measured value and x represents the number of years; and predicting the durability of the coated metallic material from the degree of deterioration in the selected property after given years obtained from the approximate equation.

Brief description of the drawings

Each drawing shows plots of the test data for each evaluation item in Example 1 obtained in accordance with the number of test years as well as line for the approximate equation derived from the plots. Fig. 1 is a graph for gloss retention as the evaluation item; Fig. 2 is a graph for color difference; Fig. 3 is a graph for hardness; Fig. 4 is a graph for boiling water absorption factor; Fig. 5 is a graph for bond strength; Fig. 6 is a graph for oxidation of coating resin; Fig. 7 is a graph for loss of polyester resin; and Fig. 8 is a graph for decomposition of melamine resin.

Mode for carrying out the invention

The coated metallic material herein used means a metallic material coated with a paint, and the metallic material means metallic materials which can be coated, including steel sheets such as cold-rolled steel sheets, molten galvanized steel sheets, electro-galvanized steel sheets, molten aluminized steel sheets and stainless steel sheets; structural steels such as angle steel and wide flange beam steel; and others such as aluminum sheets.

Properties of these coated metallic materials differ in the rate of their deterioration or in their importance, depending upon uses of the materials such as building applications for walls, structural materials, etc. or interior applications for furnitures, office appliances, etc. and also upon external conditions during use as in outdoor use or indoor use. In predicting the durability of the coated metallic materials, it is not always necessary to measure all properties of the coated metallic materials such as corrosion resistance, gloss, color, viscoelasticity of the coating film, waterproofness of the coating film, adhesion between the coating film and metallic substrate material, and chemical change of the film-forming resins, it is preferable to predict their durability regarding the properties selected according to their application purposes and external conditions during use. However, as regards some coated metallic materials used for building materials, particularly, outside walls, almost all the properties are important. Therefore, it is desirable to preestimate as many properties thereof as possible and predict the durability of the coated metallic-material as-a whole.

In the method of-predicting the durability according to this invention, a practical exposure test is made in the first place. The practical exposure test is conducted at a place where the surrounding conditions are nearly equal to those-under-which the coated metallic material to be predicted will be-used. This test is carried out at least for two years. The reason for this is that substantially no problem arises empirically in the durability of the coated metallic materials within two or three years and accordingly the prediction of the durability is directed to the durability at least for three years or longer, usually 5—20 years. The practical exposure test for less than two years results in lower accuracy of the prediction. When the term of prediction is longer, longer duration of the practical exposure test is necessary for higher accuracy of the prediction.

On the other hand, artificial accelerated weathering tests are conducted. For the artificial accelerated weathering tests, various methods have been developed and put into practical use until now. Each of these methods does not reproduce natural surrounding conditions as such but has distinct features in the test conditions. Accordingly, selection and conduction of any one or two or these test methods will give one-sided data. In this invention, at least one artificial accelerated weathering test per each of at least four specific types of artificial accelerated weathering tests are carried out in order to obtain overall data under the conditions as close to natural surrounding conditions as possible. The following are these four types of artificial accelerated weathering tests and test names (abbreviations are shown in parentheses) already known as examples of the artificial accelerated weathering tests:

(i) Mild type:
   Xenon Fade-O-Meter test (X.F.M.)
   Sunshine Weather-O-Meter test (S.W.M.)
(ii) Accelerated corrosion type:
   Composite cyclic test combining an ultraviolet irradiation test and a corrosion test (M.C.T.) (The well-known salt spray test is used as one test constituting M.C.T.)
(iii) Heat-accelerated type:
   EMMAQUA test (E.M.Q.)
   High temperature Sunshine Weather-O-Meter test (H.S.W.M.)
   Heat test (H.T.)
(iv) Ultraviolet irradiation type:
   QUV test (Q.U.V.)
   Dew cycle Weather-O-Meter test (D.W.M.)
   Ultraviolet Fade-O-Meter test (U.F.M.)

**0 079 970**

The duration for which the artificial accelerated weathering tests are to be conducted may be appropriately determined for each of the tests in consideration of the number of years for which the prediction is made, since the deterioration rate of the material varies depending upon the method of artificial accelerated weathering test used. In the actual exposure test and the artificial accelerated weathering test, sampling of the material is conducted as the time proceeds and in accordance with progress of the test, and evaluation items indicating changes in selected properties are measured. These evaluation items may include, for example, gloss retention for the gloss, color difference for the color, surface hardness for the visco-elasticity of coating film, boiling water absorption factor for the waterproofness of coating film, and bond strength for the adhesion between coating film and metallic substrate material. Further, evaluation items indicating the degree of chemical change in the coating film that basically relates to change in the above-mentioned properties may include, for example, oxidation, decomposition and loss of the coating film-forming resin, and for the coating film using a plasticizer, the remaining amount of the plasticizer. Among those evaluation items, proper items may be determined with respect to the film-forming resin of the coated metallic material to be predicted. Concrete methods used for measuring such evaluation items may be well-known ones, examples of which will be given in the Examples. The data of each test obtained in the manner as mentioned in the foregoing are treated for each property of the coated metallic material to be predicted, as follows: In the first place, the data of the practical exposure test are plotted on a coordinate system with the number of years as the x coordinate axis and with the measured value of the evaluation item indicating change in each property to be predicted (this measured value in this invention is referred to as change value, including measured value in the artificial accelerated weathering tests) as the y coordinate to depict a temporary prediction line. At least three points are desirably plotted for depicting the temporary prediction line. Secondly, the data of the artificial accelerated weathering tests are treated for each test as follows: Among the change values, those falling within the range of change values of the practical exposure test are selected (such values are usually obtained in the early stage of the artificial accelerated weathering tests) and plotted on the coordinate system in which the temporary prediction line is depicted, so as to be positioned on the temporary prediction line or uniformly dispersed in the vicinity thereof while converting the test hours in the artificial accelerated weathering test to the number of years in the practical exposure test so as to hold a direct-proportional relation. In other words, the change values of data in each artificial accelerated weathering test are taken as such on the y-axis, and the x-axis (scale: the number of years) is graduated so that a constant proportion may be provided between the distance from the origin and the test time in the artificial accelerated weathering test and (x, y) plots may be positioned on the temporary prediction line as far as possible. Therefore, when only one datum is obtained in the artificial accelerated weathering test, it may be merely plotted at the position of the change value on the temporary prediction line. However, when two or more data are obtained, the relation on the x axis between those points of the data should be in conformity with the above requirements. Thus, with respect to each plot of the data obtained in the accelerated weathering test, there is a definite direct-proportional relation between the number of years in the practical exposure test read on the x-axis and the original test hours in the artificial accelerated weathering test, (hereinafter, this definite ratio is referred to as practical exposure year conversion factor). While a scale with equal distances is usually used for the coordinate systems, it is unobjectionable depending upon the state of the change with lapse of time to use other scales, for example, logarithmic scales, etc. Of the data of each artificial accelerated weathering test, the change values out of the range of change values of the practical exposure test are plotted on the coordinate system similarly to the above, with the number of test hours converted into the number of years by means of the practical exposure year conversion factor. This data treatment is applied to each artificial accelerated weathering test. Thus, all data of the practical exposure test and artificial accelerated weathering tests are plotted on the coordinate system, thereby showing the entire aspect of change in change values which has some degree of dispersion.

Then, the approximate equation: $y=f(x)$ representing the whole plot obtained in the manner as mentioned above is determined by statistical calculation, in which equation y represents the change value and x represents the number of years. The approximate equation may be determined in such a manner that a line is drawn with eye-measure on the coordinate system in which the data are plotted. However, as a result of extensive tests, the present inventors have revealed that either of the following fundamental equations is established between the change value (y) and the number of years (x), with the correlation at a high significance level:

$$y=\pm ax+b \qquad (1)$$

$$y=c\, e^{\pm dx} \qquad (2)$$

wherein a and d are coefficients which are dependent upon the composition of the coating film, and b and c are coefficients which are dependent upon the evaluation item.

Evaluation items obeying equation (1) may include, for example color difference and hardness; and in case of forming the coating film from polyester resin, melamine resin or the like, oxidation of the resin, decomposition of the resin and loss in the amount of the resin. Those obeying equation (2) may include, for

4

**0 079 970**

example gloss retention, boiling water absorption factor, bond strength for the substrate metallic material, remaining amount of plasticizer, amount of vinyl chloride resin soluble in tetrahydrofuran (THF), and amount of chlorine liberated from vinyl chloride resin. Accordingly, the approximate equation can be determined by calculating a and b, or c and d, for the above-cited evaluation items, by way of statistical calculation that x and y values of each plot are applied to the corresponding equation shown above, and for evaluation items other than the above-cited ones, in such a manner that x and y values of each plot are statistically calculated and either equation (1) or (2) exhibiting higher significance level is adopted as the approximate equation. The determination of the approximate equation from data of the practical exposure test and artificial accelerated weathering tests is carried out on each property of the prediction object, coated metallic material.

The approximate equation, $y=f(x)$, thus obtained indicates approximately the state of the property changing with the passage of years. Consequently, the change value of the property in question after the predetermined number of years, i.e. deterioration degree of the property can be estimated by substituting the number of years for x to calculate y, or reading the same result on the drawing. Then, the durability of the coated metallic material can be predicted more completely by combining the degree of deterioration after given number of years with respect to all the properties selected. When the prediction is made on a number of properties, the calculation of the change value (y) after the given number of years (x) regarding each property or indication thereof on the prediction lines is not always convenient as such for the overall consideration because there are differences in the units of change values of the properties and in the changing states thereof. Thus, the change value at the time of start of the test (that is, y value at x=o) is used as a standard. (With respect to the measurement from indicating y=o, at x=o, y value of another appropriate item relevant to such measurement item in point of the property in question is used as a standard). For example, when the measurement item is color difference, values of $\Delta E$ of L, a, and b systems according to "the method of indicating color difference" of JIS Z8730 are determined, and the change thereof with lapse of time is depicted in a graph and standardized. And, change in the change values (y) of various properties with lapse of time is then depicted in the same drawing with a common scale (ratio). This is convenient for combining the prediction values for various properties and judging the overall durability of the coated metallic material. The criterion of judging the durability of coated metallic material, i.e. definite criterion for judging what degree of change value (y) is the limit of working life, cannot be consistently determine since the properties of the material differ in the importance depending upon the application purposes and the position of a person to judge the durability of the material. It may be freely established from individual standpoint.

Example 1

The surface of molten galvanized steel sheet (deposition amount of the zinc on both surfaces: 305 $g/m^2$) of 0.4 mm thickness was subjected to alkali defatting treatment and phosphate treatment and then coated with an epoxy type primer, which was baked to give a coating of 5 µm after drying. A blue thermosetting coating comprising a phthalic acid-polyol condensation product and melamine resin as a cross-linking agent was applied onto the primer coating and baked to give a coating of 13 µm after drying.

The coated steel sheet was tested in accordance with the procedure given below for the purpose of predicting the durability thereof in case of using it as an outside wall in Minami-Boso district, Japan, and approximate equation for prediction was obtained. Since the outside wall material is required to hold aesthetic appearance and anticorrosiveness for a long term, the prediction object properties, evaluation items and specific measuring methods are chosen as follows:

5

| Prediction object property | Evaluation item | Measuring method |
|---|---|---|
| (1) Gloss | Gloss retention | 60° Mirror reflectivity in accordance with JIS Z8741 (method of measuring glossiness) $\Delta G = Gt/Go \times 100$ (%) $\Delta G$: Gloss retention $Gt$ : Gloss after test $Go$: Gloss before test |
| (2) Color | Color difference | Color difference in L, a, and b systems in accordance with JIS Z8730 (Method of indicating color difference). |
| (3) Viscoelasticity of coating | Hardness | Micro-Vickers hardness of coating film surface measured with a micro hardness meter (Model MM-2, mfd. by Taiyo Tester Co.) |
| (4) Waterproofness of coating | Boiling water absorption | Boiling water absorption factor measured in accordance with JIS K7209 (test method for water absorption factor and boiling water absorption factor of plastics |
| (5) Adhesion between coating film and substrate | Bond strength | Perpendicular peeling test on an adhesive (Araldite 400#) applied and cured (Amsler universal tensile tester, Model RES-2 mfd. by Shimazu Corporation was used) |
| (6) Chemical change of film-forming resins | (a) Quantity of resin oxidized (b) Loss of polyester resin (c) Quantity of melamine resin decomposed | Multiple reflection method was used to determine a ratio of IR absorbance after test at 3380 cm$^{-1}$ (OH group) for (a), at 1730 cm$^{-1}$ (CO group) for (b), or at 1630 cm$^{-1}$ (NH group) for (c) to that before test (FT-IR spectrometer Model FT-20B/D mfd. by Digilab Co. was used) |

The practical exposure test was conducted in Ichikawa City, Chiba prefecture, Japan for 5 years from March 1971 to March 1976.

As the artificial accelerated weathering test, all the test methods (9 methods) as previously explained with respect to the four types of tests were conducted. However, measurement of part of evaluation items was omitted in the other tests than the Sunshine Weather-O-Meter test (S.W.M.) and the composite cyclic test (M.C.T.). The high-temperature Sunshine Weather-O-Meter test (H.S.W.M.) was carried out at 100°C. The composite cyclic test (M.C.T.) was conducted with one cycle of the test being composed of the dew cycle Weather-O-Meter test (D.W.M.) for 40 hours and the gas (sulfurous acid) corrosion test for 20 hours. The number of test hours in each artificial accelerated weathering test was as follows: 8000 hours for S.W.M., 600 hours for M.C.T., one million Langlies in exposure quantity for E.M.Q., 1000 hours for H.S.W.M., 1000 hours for H.T., 3000 hours for Q.U.V., 9000 hours for X.F.M., 2000 hours for D.W.M., and 600 hours for U.F.M.

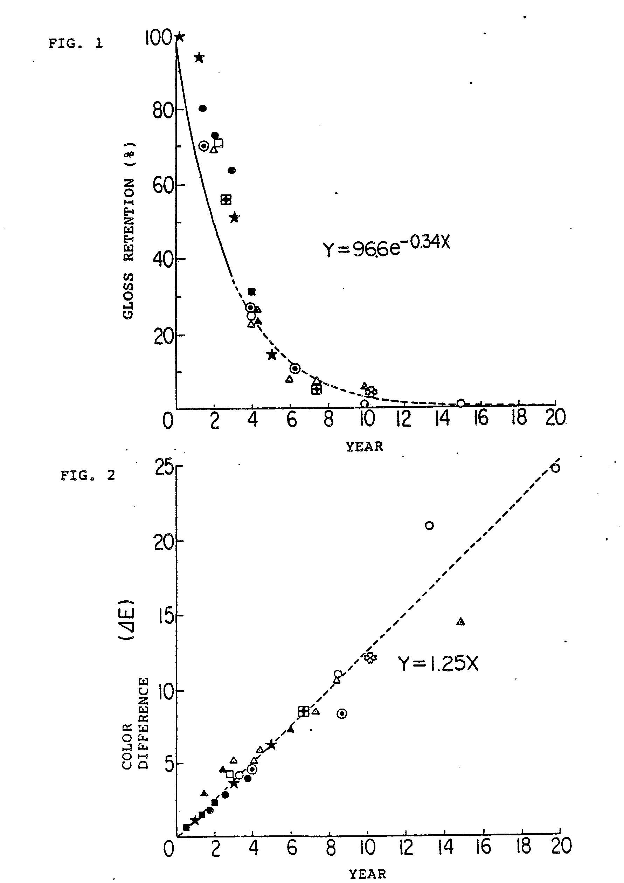

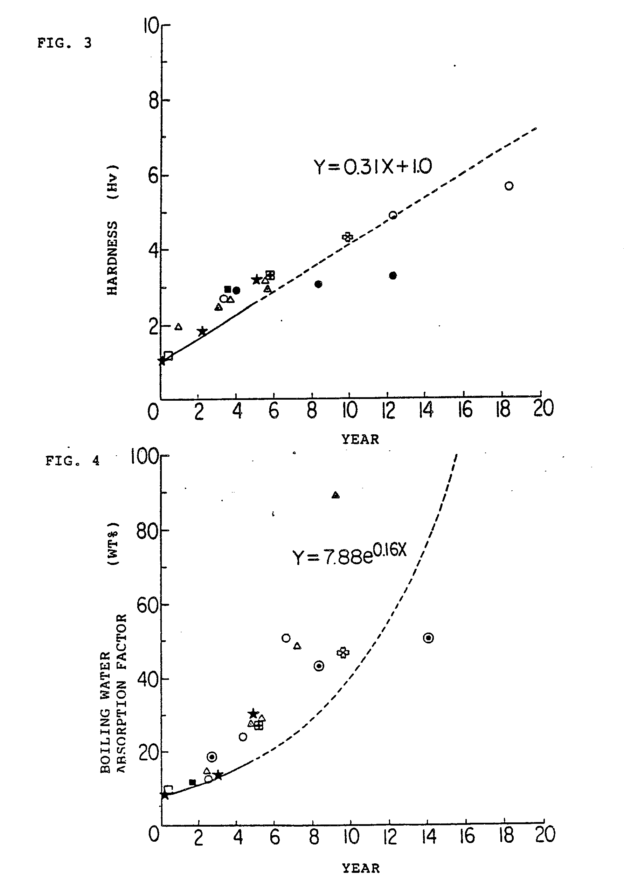

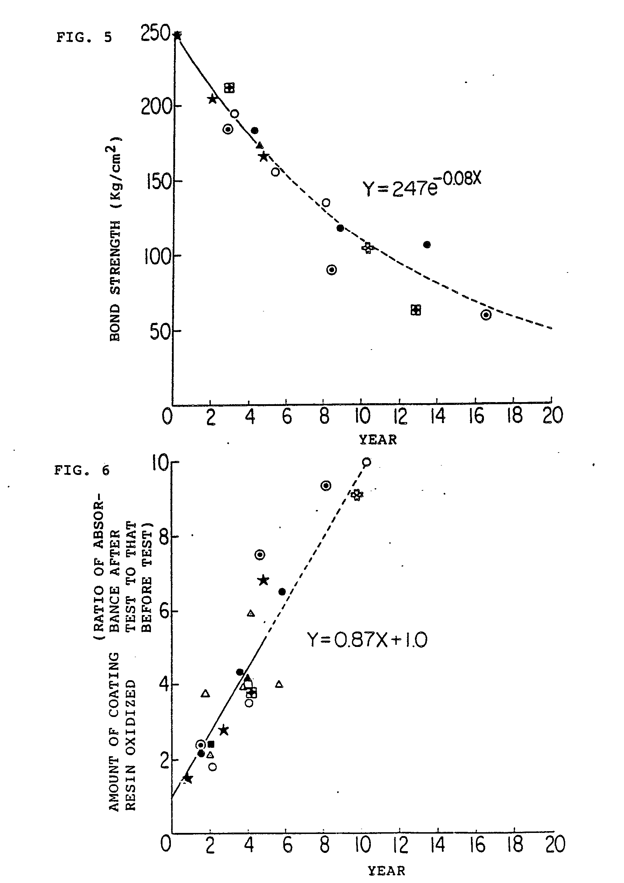

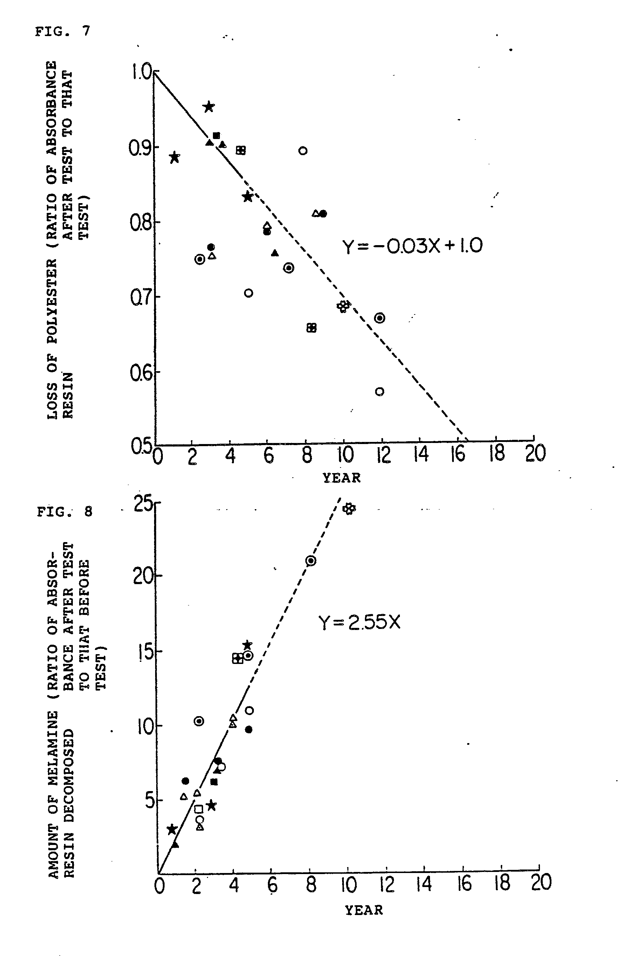

The data obtained in the practical exposure test and the artificial accelerated weathering tests in which the sampling was conducted with lapse of time were treated as explained above and plotted in a drawing for each measurement item. Approximate equations (regressive equations) were obtained therefrom by statistical method. The results for the measurement items are shown in Figs. 1 to 8. Fig. 1 shows the results for gloss retention, Fig. 2 for color difference, Fig. 3 for hardness, Fig. 4 for boiling water absorption factor, Fig. 5 for bond strength, Fig. 6 for oxidation of the coating resin, Fig. 7 for loss of the polyester resin, and Fig. 8 for decomposition of the melamine resin.

Symbols used in the Figures represent plots of the data obtained in the following artificial accelerated weathering tests:

| | |
|---|---|
| * ... practical exposure test | △... Q.U.V. |
| ○... S.W.M. | ▲... H.S.W.M. |
| ⊙... D.W.M. | □... U.F.M. |
| ●... X.F.M. | ⊡... M.C.T. |
| △... E.M.Q. | ■... H.T. (100°C). |

From the approximate equations or the graphs thus obtained, the durability on each property of the

6

**0 079 970**

coated metallic material can be predicted by obtaining the change value y corresponding to the given number of years x. Meanwhile, the above-mentioned practical exposure test was further continued for 5 years, i.e. for 10 years in all, leaving the exposure conditions as they were. Measurements of the same evaluation items as mentioned above on these exposed specimens gave change values shown by the symbol * in Figs. 1 to 8. From comparison of these values with the respective change values y at 10 years later estimated from the prediction lines in these drawings, it is seen that the durability of the coated metallic material of this type can be predicted with considerably high accuracy.

Example 2

The surface of cold-rolled steel sheet of 0.6 mm in thickness was subjected to alkali defatting treatment and phosphate treatment and then coated with a primer made of a mixture of acrylic resin and epoxy resin, which was baked to give a coating of 5 μ min thickness after drying. A red vinyl chloride plastisol coating was applied on the primer coating and baked to give a coating of 200 μm thickness after drying.

The coated steel sheet was tested in accordance with the procedure given below for the purpose of predicting the durability of the sheet in case of using it as a roofing material in Miyazaki city, Miyazaki prefecture, Japan, and approximate equation for prediction of the durability was obtained. Since the roofing material is required, similarly to the outside wall material, to hold aesthetic appearance and anticorrosiveness for a long term, the prediction object properties, evaluation items and specific measuring methods chosen were substantially the same as in Example 1. However, in this example, a different film-forming resin was used, and therefore the following evaluation items of chemical change of the resin and measuring methods thereof were selected.

(i) Remaining amount of plasticizer and amount of vinyl chloride resin soluble in THF.
Measuring method: A liquid chromatograph (Model PRP-1, mfd. by Shimazu Corporation) is used with THF as the solvent and carrier. The specific peak after the test is divided by that before the test.
(ii) Amount of chlorine liberated from vinyl chloride resin.
Measuring method: Geiger flex (Goniometer Model KG-X, mfd. by Rigaku Denki Co.) is used, and a chromium target is used, Cl and Ti are analyzed, ratio of intensity of Cl Kα rays/intensity of Ti Kα rays is determined, and further the ratio of this ratio after the test to that before the test is obtained.

The practical exposure test was conducted in Miyazaki city, Miyazaki prefecture for two years from March 1976 to March 1978.

The artificial accelerated weathering tests were conducted similarly to Example 1, but the total exposure time in each of the tests was as follows: 10,000 hours for S.W.M., 1200 hours for M.C.T., two millions Langlies in exposure quantity for E.M.Q., 2000 hours for H.S.W.M., 2000 hours for H.T., 6000 hours for Q.U.V., 10,000 hours for X.F.M., 4000 hours for D.W.M. and 5000 hours for U.F.M. Thereafter, the test data were treated in the same manner as in Example 1 and the following approximate equations for predicting the change values (y) were obtained for the respective evaluation items:

|  |  | (Unit of y) |
|---|---|---|
| Gloss retention | $y = 96.8\ e^{-0.149x}$ | (%) |
| Color difference | $y = 0.80\ x$ | ($\triangle$E) |
| Hardness | $y = 0.07\ x + 1.31$ | (Hv) |
| Boiling water absorption factor | $y = 3.02\ e^{0.13x}$ | (Wt %) |
| Bond strength | $y = 170.31\ e^{-0.08x}$ | (kg/cm$^2$) |
| Remaining amount of plasticizer | $y = 1.05\ e^{-0.92x}$ | (ratio in height of peak after test to that before test) |
| Amount of vinyl chloride resin soluble in THF | $y = 1.14\ e^{-0.94x}$ | (ratio in height of peak after test to that before test) |
| Amount of chlorine liberated from vinyl chloride resin | $y = 1.31\ e^{-0.04x}$ | (intensity ratio of X-ray after test to that before test) |

Substitution of the given number of years for x in each equation shown above gives the corresponding

7

**0 079 970**

change value y, and as a result the durability for each property can be predicted. By combining these results, the overall durability of the coated steel sheet can also be judged. The practical exposure test was further continued under the same conditions for 3 years to carry out the exposure test for 5 years in total.

The y value obtained by substituting 5 for x in each approximate equation as shown above approximated to the change value for each measurement item obtained in the practical exposure test for 5 years to the same degree as in Example 1.

Industrial applicability

According to this invention, changes in various properties of the coated metallic material can be predicted, with high accuracy, from approximate equations of prediction lines which are derived or depicted from series of plots obtained by partially overlapping the data of the practical exposure test with those of the artificial accelerated weathering tests conducted under the conditions corresponding to a variety of natural environmental conditions, in the drawing. Therefore, this invention is very valuable in industry.

**Claims**

1. A method of predicting the durability of a coated metallic material with respect to its properties selected according to its application purposes and the external conditions during its use, the method consisting of carrying out a practical exposure test for a short period of time but for not less than two years, along with at least one group of artificial accelerated weathering tests, the or each group including at least a mild type for example the Xenon Fade-O-Meter test or Sunshine Weather-O-Meter test, an accelerated corrosion type, a heat acceleration type and an ultraviolet irradiation type test; plotting data obtained in the practical exposure test on a coordinate system with the number of years as the x coordinate axis and the measured value in the property selected as the y coordinate axis to depict a temporary prediction line; then plotting data obtained in each type of accelerated weathering test which are within the range of the measured values obtained in said practical exposure test, on the coordinate system in which the temporary prediction line is depicted, so as to be positioned on said temporary prediction line or uniformly dispersed about the line while converting the test hours in each type of accelerated weathering test to the number of test years in the practical exposure test so that said test hours and test years may be in relation of direct proportion;

further plotting the measured values obtained in the types of accelerated weathering tests which are outside the range of the measured values obtained in the practical exposure test, on said coordinate system; determining the approximate equation: $y=f(x)$ representing the whole plot thus obtained, wherein y represents the measured value and x represents the number of years; and predicting the durability of the coated metallic material from the degree of deterioration in the selected property after given years obtained from the approximate equation.

2. A method of predicting the durability of a coated metallic material as defined in claim 1, wherein at least one of a Xenon Fade-O-Meter test and a Sunshine Weather-O-Meter test is carried out as the artificial accelerated weathering test of mild type.

3. A method of predicting the durability of a coated metallic material as defined in claim 1 or 2, wherein a composite cyclic test combining an ultraviolet irradiation test and a corrosion test is carried out as the artificial accelerated weathering test of accelerated corrosion type.

4. A method of predicting the durability of a coated metallic material as defined in any one of claims 1—3, wherein at least one of an EMMAQUA test (E.M.Q.), high temperature Sunshine Weather-O-Meter test and heating test is carried out as the artificial accelerated weathering test of heat acceleration type.

5. A method of predicting the durability of a coated metallic material as defined in any one of claims 1—4, wherein at least one of a QUA test, dew cycle Weather-O-Meter test and ultraviolet Fade-O-Meter test is carried out as the artificial accelerated weathering test of ultraviolet irradiation type.

6. A method of predicting the durability of a coated metallic material as defined in any one of claims 1—5, wherein the property for which the durability is to be predicted is at least one selected from anticorrosiveness, gloss, color, viscoelasticity of coating film, waterproofness of coating film, adhesion between coating film and substrate metallic material and chemical change of coating film-forming resin.

7. A method of predicting the durability of a coated metallic material as defined in claim 6, wherein the practical exposure test data and the artificial accelerated weathering test data involve measurement results of the color difference and the hardness regarding the color and the viscoelasticity of coating film, respectively, as evaluation items, and approximate equations representing change in the color and hardness with lapse of time are derived in the form of $y=\pm ax+b$ from the test data, wherein the coefficients a and b are dependent upon the composition of the coating film and the evaluation item respectively.

8. A method of predicting the durability of a coated metallic material as defined in claim 6, wherein the actual exposure test data and the artificial accelerated weathering test data involve measurement results of the gloss retention, boiling water absorption factor and bond strength regarding the gloss, waterproofness of coating film and adhesion of coating film, respectively, as evaluation items, and approximate equations relating to the gloss retention, boiling water absorption factor and bond strength are derived in the form of

8

$y=c\,e^{\pm dx}$ from the test data, wherein the coefficients d and c are dependent upon the composition of the coating film and the evaluation item respectively.

9. A method of predicting the durability of a coated metallic material as defined in any one of claims 1—8, wherein a scale is provided at equal distances in the coordinate system.

10. A method of predicting the durability of a coated metallic material as defined in any one of claims 1—9, wherein the coated metallic material is a coated steel sheet.

11. A method of predicting the durability of a coated metallic material as defined in claim 10, wherein the coated steel sheet is a plated and coated steel sheet.

12. A method of predicting the durability of a coated metallic material as defined in any one of claims 1—9, wherein the coated metallic material is a coated structural steel.

**Patentansprüche**

1. Verfahren zur Vorhersage der Beständigkeit eines beschichteten metallischen Materials hinsichtlich dessen Eigenschaften, welche hinsichtlich dessen Anwendungszwecken und dessen äußerer Verwendungsbedingungen ausgewählt sind, wobei das Verfahren darin besteht, einen praktischen Belichtungstest über eine kurze Zeitperiode, jedoch über, nicht weniger als zwei Jahre durchzuführen, wobei dies zusammen mit zumindest einer Gruppe von künstlich beschleunigten Verwitterungstesten erfolgt, wobei die oder jede der Gruppen zumindest einen gemilderten Typus umfaßt, beispielsweise den Xenon-Lichtechtheitsprüfungstest oder den Sonnenschein-Bewitterungsapparat-Test, sowie einen beschleunigten Korrosionstyp, einen beschleunigten Wärmetesttyp und einen Ultraviolett-Bestrahlungstesttyp; weiterhin darin, die in dem praktischen Belichtungstest erhaltenen Daten in einem Koordinatensystem auszudrucken, wobei die Anzahl an Jahren als Koordinate der X-Achse und der gemessene Wert der ausgewählten Eigenschaft als Koordinate der Y-Achse angetragen werden, um eine vorläufige Vorhersagelinie zu erhalten; daraufhin Ausdrucken der in jedem Typ der beschleunigten Verwitterungsteste erhaltenen Daten, welche in dem Bereich der gemessenen Daten liegen, die in den praktischen Belichtungstest erhalten wurden, wobei die Daten in dem Koordinatensystem angetragen werden, in welchem die vorläufige Vorhersagelinie aufgezeichnet ist, so daß die Daten auf der vorläufigen Vorhersagelinie oder gleichförmig um diese verteilt angeordnet sind, wobei die Teststunden in jedem Typ des beschleunigten Verwitterungstest in die Anzahl der Testjahre in dem praktischen Belichtungstest umgewandelt werden, so daß die Teststunden und Testjahre in einem direkten Verhältnis zueinandet stehen;

weiterhin werden die in den Typen von beschleunigten Verwitterungstests erhaltenen Daten, welche außerhalb des Bereichs der gemessenen Daten, die aus dem praktischen Belichtungstest erhalten wurden, in dem Koordinatensystem aufgetragen; daraufhin wird die Näherungsfunktion: $y=f(x)$ bestimmt, welche die so erhaltene graphische Darstellung kennzeichnet, wobei y den gemessenen Wert und x die Anzahl der Jahre darstellen; anschließend wird die Beständigkeit des beschichteten metallischen Materials aus dem Maß der Verschlechterung der ausgewählten Eigenschaft, die nach einer vorgegebenen Anzahl von Jahren aus der Näherungsfunktion bestimmt wird, vorhergesagt.

2. Verfahren zur Vorhersage der Beständigkeit eines beschichteten metallischen Materials nach Anspruch 1, wobei zumindest einer der Xenon-Lichtechtheitsprüfungs-Tests oder der Sonnenschein-Bewitterungsapparat-Tests als der künstlich beschleunigte Verwitterungstest des gemilderten Typs ausgeführt wird.

3. Verfahren zur Vorhersage der Beständigkeit eines beschichteten metallischen Materials nach Anspruch 1 oder 2, wobei ein zusammengesetzter zyklischer Test, der einen ultravioletten Bestrahlungstest und einen Korrosionstest umfaßt, als der künstlich beschleunigte Verwitterungstest des beschleunigten Korrosionstyps durchgeführt.

4. Verfahren zur Vorhersage der Beständigkeit eines beschichteten metallischen Materials nach einem der Ansprüche 1 bis 3, wobei zumindest einer eines EMMAQUA-Test (E.M.Q.), des Hochtemperatur-Sonnenschein-Bewitterungsapparat-Tests oder des Erwärmungstests als der künstlich beschleunigte Verwitterungstest des Wärmebeschleunigungs-Typs durchgeführt wird.

5. Verfahren zur Vorhersage der Beständigkeit eines beschichteten metallischen Materials nach einem der Ansprüche 1 bis 4, wobei zumindest einer der QUA-Tests, Tauzyklus-Bewitterungsapparat-Tests oder Ultraviolett-Lichtechtheitsprüfungstests als der künstlich beschleunigte Verwitterungstest des Ultraviolett-Bestrahlungs-typs durchgeführt wird.

6. Verfahren zur Vorhersage der Beständigkeit eines beschichteten metallischen Materials nach einem der Ansprüche 1 bis 5, wobei die Eigenschaft, für welche die Beständigkeit vorhergesagt werden soll, zumindest in der Korrosionsbeständigkeit, im Glanz, in der Farbe, in der Viskoelastizität des Beschichtungsfilms, in der Wasserbeständigkeit des Beschichtungsfilms, in der Haftung zwischen dem Beschichtungsfilm und dem metallischen Materialuntergrund oder in der chemischen Veränderung des den Beschichtungsfilm bildenden Kunststoffes liegt.

7. Verfahren zur Vorhersage der Beständigkeit eines beschichteten metallischen Materials nach Anspruch 6, wobei die Daten des praktischen Belichtungstests und die Daten des künstlich beschleunigten Verwitterungstests jeweils Meßergebnisse des Farbunterschieds und der Härte in bezug auf die Farbe und die Viskoelastizität des Beschichtungsfilms als Auswertungspunkte umfassen, und wobei Näherungsfunktionen, welche die Veränderung der Farbe und der Härte über den Verlauf der Zeit wiedergeben, in der Form y=±ax+b aus den Testdaten abgeleitet sind, wobei die Koeffizienten a und b jeweils von der Zusammensetzung des Beschichtungsfilms und den Auswertungspunkten abhängen.

8. Verfahren zur Vorhersage der Beständigkeit eines beschichteten metallischen Materials nach Anspruch 6, wobei die aktuellen Belichtungstestdaten und die künstlich beschleunigten Verwitterungstestdaten jeweils Meßergebnisse der Glanzerhaltung, des Faktors der Absorption siedenden Wassers und der Haftfestigkeit bezüglich des Glanzes, der Wasserbeständigkeit des Beschichtungsfilms und der Haftung des Beschichtungsfilms als Auswertungspunkte umfassen und wobei die Näherunsfunktionen bezüglich der Glanzerhaltung, des Faktors der Absorption siedenden Wassers und der Haftfestigkeit in der Form y=c e^{±dx} von den Testdaten abgeleitet sind, wobei die Koeffizienten d und c jeweils von der Zusammensetzung des Beschichtungsfilms und den Auswertungspunkten abhängen.

9. Verfahren zur Vorhersage der Beständigkeit eines beschichteten metallischen Materials nach einem der Ansprüche 1 bis 8, wobei in dem Koordinatensystem eine Skala mit gleichen Abständen vorgesehen ist.

10. Verfahren zur Vorhersage der Beständigkeit eines beschichteten metallischen Materials nach einem der Ansprüche 1 bis 9, wobei das beschichtete metallische Material eine beschichtete Stahltafel ist.

11. Verfahren zur Vorhersage der Beständigkeit eines beschichteten metallischen Materials nach Anspruch 10, wobei die beschichtete Stahltafel eine plattierte und beschichtete Stahltafel ist.

12. Verfahren zur Vorhersage der Beständigkeit eines beshichteten metallischen Materials nach einem der Ansprüche 1 bis 9, wobei das beschichtete metallische Material beschichteter Baustahl ist.

**Revendications**

1. Procédé pour prévoir la longévité d'un matériau métallique revêtu quant à ses propriétés choisies selon les buts auxquels il s'applique et les conditions extérieures régnant pendant son utilisation, le procédé consistant à effectuer un essai d'exposition réelle pendant une période de temps courte mais non inférieure à deux années, parallèlement à au moins un groupe d'essais de vieillissement artificiel accéléré aux intempéries, le ou chaque groupe comprenant au moins un essai de type modéré, par exemple l'essai par un appareil Fade-O-Meter à lampe au xénon ou l'essai par un appareil Weather-O-Meter à lumière solaire, un essai du type à corrosion accélérée, un essai du type à accélération par la chaleur et un essai du type à irradiation ultraviolette; à porter graphiquement les résultats obtenus dans l'essai d'exposition réelle sur un système de coordonnées où l'axe des coordonnées x indique le nombre d'années et l'axe des coordonnées y indique la valeur mesurée de la propriété choisie, de façon à établir une courbe de prévision temporaire; puis à porter graphiquement sur le système de coordonnées dans lequel est établie la courbe de prévision temporaire les résultats obtenus dans chaque type d'essai de vieillissement accéléré aux intempéries qui se situent dans la plage des valeurs mesurées obtenues dans ledit essai d'exposition réelle, de manière qu'ils soient positionnés sur ladite courbe de prévision temporaire ou uniformément répartis au voisinage de la courbe, tout en convertissant les heures d'essai de chaque type d'essai de vieillissement accéléré aux intempéries en nombre d'années d'essai de l'essai d'exposition réelle de telle façon que lesdites heures d'essai et années d'essai puissent être en relation de proportionalité directe; à porter encore graphiquement sur ledit système de coordonnées les valeurs mesurées obtenues dans les types d'essais de vieillissement accéléré aux intempéries qui se situent en dehors de la plage des valeurs mesurées obtenues dans l'essai d'exposition réelle; à déterminer l'équation approchée: y=f(x) représentant le tracé total ainsi obtenu, où y représente la valeur mesurée et x représente le nombre d'années; et à prévoir la longévité du matériau métallique revêtu d'après le degré de dégradation, obtenu par l'équation approchée, de la propriété choisie après un nombre donné d'années.

2. Procédé pour prévoir la longévité d'un matériau métallique revêtu tel que défini dans la revendication 1, dans lequel l'un au moins d'un essai par un appareil Fade-O-Meter à lampe au xénon et d'un essai par un appareil Weather-O-Meter à lumière solaire est effectué à titre de l'essai de vieillissement artificiel accéléré aux intempéries du type modéré.

3. Procédé pour prévoir la longévité d'un matériau métallique revêtu tel que défini dans la revendication 1 ou 2, dans lequel un essai cyclique composite combinant un essai d'irradiation ultraviolette et un essai de corrosion est effectué à titre de l'essai de vieillissement artificiel accéléré aux intempéries du type à corrosion accélérée.

4. Procédé pour prévoir la longévité d'un matériau métallique revêtu tel que défini dans l'une quelconque des revendications 1 à 3, dans lequel l'un au moins d'un essai EMMAQUA (E.M.Q.), d'un essai par un appareil Weather-O-Meter à lumière solaire à haute température et d'un essai par chauffage est effectué à titre de l'essai de vieillissement artificiel accélére aux intempéries du type à accélération par la chaleur.

5. Procédé pour prévoir la longévité d'un matériau métallique revêtu tel que défini dans l'une quelconque des revendications 1 à 4, dans lequel l'un au moins d'un essai QUA, d'un essai par un appareil Weather-O-Meter à cycle de rosée et d'un essai par un appareil Fade-O-Meter à lumière ultraviolette est effectué à titre de l'essai de vieillissement artificiel accéléré aux intempéries du type à irradiation ultraviolette.

6. Procédé pour prévoir la longévité d'un matériau métallique revêtu tel que défini dans l'une

**0 079 970**

quelconque des revendications 1 à 5, dans lequel la propriété pour laquelle la longévité doit être prévue est au moins une propriété choisie parmi l'anticorrosivité, le brillant, la couleur, la visco-élasticité d'une pellicule de revêtement, l'imperméabilité d'une pellicule de revêtement, l'adhérence entre une pellicule de revêtement et le matériau métallique servant de substrat et l'altération chimique d'une résine filmogène de revêtement.

7. Procédé pour prévoir la longévité d'un matériau métallique revêtu tel que défini dans la revendication 6, dans lequel les résultats d'essai d'exposition réelle et les résultats des essais de vieillissement artificiel accéléré aux intempéries comprennent des résultats de mesure de la différence de couleur et de la dureté comme critères d'évaluation concernant respectivement la couleur et la visco-élasticité de la pellicule de revêtement, et les équations approchées représentant les variations de couleur et de dureté en fonction du temps écoulé sont mises d'après les résultats d'essai sous la forme $y=\pm ax+b$, où les coefficients a et b sont respectivement fonction de la composition de la pellicule de revêtement et du critère d'évaluation.

8. Procédé pour prévoir la longévité d'un matériau métallique revêtu tel que défini dans la revendication 6, dans lequel les résultats d'essai d'exposition réelle et les résultats des essais de vieillissement artificial accéléré aux intempéries comprennent des résultats de mesure de la conservation du brillant, du facteur d'absorption d'eau bouillante et de la force de liaison comme critères d'évaluation concernant respectivement le brillant, l'imperméabilité de la pellicule de revêtement et l'adhérence de la pellicule de revêtement, et les équations approchées relatives à la conservation du brillant, au facteur d'absorption d'eau bouillante et à la force de liaison sont mises d'après les résultats d'essais sous la forme $y=c\,e^{\pm dx}$, où les coefficients d et c sont respectivement fonction de la composition de la pellicule de revêtement et du critère d'évaluation.

9. Procédé pour prévoir la longévité d'un matériau métallique revêtu tel que défini dans l'une quelconque des revendications 1 à 8, dans lequel le système de coordonnées est muni d'une échelle à distances égales.

10. Procédé pour prévoir la longévité d'un matériau métallique revêtu tel que défini dans l'une quelconque des revendications 1 à 9, dans lequel le matériau métallique revêtu est une feuille d'acier revêtu.

11. Procédé pour prévoir la longévité d'un matériau métallique revêtu tel que défini dans la revendication 10, dans lequel la feuille d'acier revêtu est une feuille d'acier plaqué et revêtu.

12. Procédé pour prévoir la longévité d'un matériau métallique revêtu tel que défini dans l'une quelconque des revendications 1 à 9, dans lequel le matériau métallique revêtu est un acier profilé revêtu.

11

FIG. 1

$Y = 96.6e^{-0.34X}$

FIG. 2

$Y = 1.25X$

1

FIG. 3

$Y = 0.31X + 1.0$

FIG. 4

$Y = 7.88e^{0.16X}$

FIG. 5

$Y = 247e^{-0.08X}$

FIG. 6

$Y = 0.87X + 1.0$

3

FIG. 7

LOSS OF POLYESTER (RATIO OF ABSORBANCE AFTER TEST TO THAT TEST) RESIN

$Y = -0.03X + 1.0$

YEAR

FIG. 8

AMOUNT OF MELAMINE (RATIO OF ABSORBANCE AFTER TEST TO THAT BEFORE TEST) RESIN DECOMPOSED

$Y = 2.55X$

YEAR

4